# EUROPÄISCHE PATENTSCHRIFT

(11) **EP 0 736 708 B1**
(45) Veröffentlichungstag und Bekanntmachung des Hinweises auf die Patenterteilung: **04.11.1998**
(21) Anmeldenummer: 96104071.4
(22) Anmeldetag: 14.03.1996
(51) Int. Cl.: F16H 61/46, F16H 61/42

(54) **Vorrichtung zum Verstellen des Fördervolumens einer Hydropumpe**
Device for adjustment of the delivery rate of a hydraulic pump
Dispositif d'ajustement du débit d'une pompe hydraulique

(30) Priorität: 06.04.1995 DE 19513032
(43) Veröffentlichungstag der Anmeldung: 09.10.1996
(73) Patentinhaber: BRUENINGHAUS HYDROMATIK GMBH, 89275 Elchingen (DE)
(72) Erfinder: Sommer, Josef, 89610 Oberdischingen (DE)
(74) Vertreter: Körber, Wolfhart, Dr. rer.nat.

(56) Entgegenhaltungen:
- EP-A- 0 325 679
- EP-A- 0 505 688
- WO-A-94/29619
- DE-A- 3 400 885
- DE-A- 3 807 599
- DE-A- 3 842 291
- DE-A- 3 903 189
- PATENT ABSTRACTS OF JAPAN vol. 011, no. 044 (M-560), 10.Februar 1987 & JP-A-61 207229 (HONDA MOTOR CO LTD), 13.September 1986,

## Beschreibung

Die Erfindung bezieht sich auf eine Vorrichtung zum Verstellen des Fördervolumens einer Hydropumpe nach dem Oberbegriff des Anspruches 1.

Aus der DE 38 07 599 A1 ist eine derartige Vorrichtung zum Verstellen des Fördervolumens einer Hydropumpe bekannt, die Teil eines hydrostatischen Getriebes für einen Fahrantrieb eines Fahrzeuges ist. Aufgrund deren hydraulischer DA-Einrichtung (drehzahlabhängigen Einrichtung) ermöglicht diese bekannte Vorrichtung das sog. automotive Fahren, bei dem die Hydropumpe mit zunehmender Drehzahl des Antriebsmotors auf größeres Fördervolumen verstellt wird, wodurch das Fahrzeug mit einer größeren Fahrgeschwindigkeit fährt, als der Drehzahl des Antriebsmotors entspricht. Das Verstellen der Hydropumpe geschieht mit Hilfe eines drehzahlproportionalen Stelldrucks, wobei die Steigung der Kennlinie dieses Stelldrucks über der Drehzahl durch die Auslegung der DA-Einrichtung bestimmt ist. Die jeweilige Fahrtrichtung wird mit dem als schaltendes Fahrtrichtungsventil mit zwei Durchfluß-Endstellungen für Vorwärtsfahrt und für Rückwärtsfahrt ausgebildeten Steuerventil vorgegeben. Die bekannte Vorrichtung verleiht dem Fahrzeug nicht nur ein weiches, elastisches und feinfühliges Fahrverhalten, sondern zeichnet sich auch durch die sog. Grenzlastregelungsfunktion aus. Diese verhindert, daß bei Belastung des Antriebs aus den Fahrzuständen und/oder aus den Lastzuständen von Zusatzgeräten das maximale Antriebsmoment des Antriebsmotors bei zulässigen Drehzahldrückungswerten nicht überschritten wird. Wenn also der Antriebsmotor durch Aufnahme einer zusätzlichen Last in seiner Drehzahl gedrückt wird, so führt dies zu einer Reduzierung des Stelldrucks und damit des Fördervolumens der Hydropumpe so lange, bis Gleichgewicht zwischen dem vom Antriebsmotor abgegebenen und dem von der Hydropumpe aufgenommenen Drehmoment besteht.

Die Antriebsleistung des Motors fällt jedoch umso stärker ab, je größer die Drehzahldrückung ist. Mit dem sog. "Teil-Inchen" wird die Drehzahldrückung reduziert und damit die Antriebsleistung erhöht. Dieses Teil-Inchen ist beispielsweise auf Seite 12 des technischen Merkblatts RD 92000/02.83 der Firma Hydromatik GmbH beschrieben; es wird mit Hilfe einer Teilinch-Einrichtung in Form eines mechanischen Gestänges durchgeführt, welches das Gaspedal mit dem den drehzahlproportionalen Stelldruck erzeugenden sog. DA-Regelventil der DA-Einrichtung verbindet und ab einem vorgegebenen Drehzahlwert unterhalb der maximalen Drehzahl des Antriebsmotors einen weiteren Anstieg des Stelldrucks verhindert. Mit anderen Worten, bei diesem vorgegebenen Drehzahlwert ist der maximale Stelldruck und damit das maximale Fördervolumen der Hydropumpe erreicht; bei weiterem Drehzahlanstieg wird die Kennlinie des Stelldrucks über der Drehzahl parallel zur Drehzahl-Koordinatenachse verschoben. Dabei ist das Teil-Inchen so ausgelegt, daß diese Verschiebung der Kennlinie erst in dem Drehzahlbereich beginnt, in dem der Antriebsmotor sein maximales Antriebsmoment entwickelt. Zusätzlich zum vorerwähnten Vorteil der optimalen Ausnutzung der Antriebsleistung während der Grenzlastregelung bietet das Teil-Inchen einen weiteren Vorteil, nämlich den, daß bei Fahrt mit nicht überlastetem Antriebsmotor das maximale Antriebsmoment nicht erst bei maximaler Drehzahl, sondern bei niedrigeren Drehzahlen genutzt wird - da bei diesen die Hydropumpe bereits auf maximales Fördervolumen eingestellt ist -, was sich vorteilhaft auf Kraftstoffverbrauch und Geräuschentwicklung auswirkt.

Es ist Aufgabe der Erfindung, die Vorrichtung der eingangs genannten Art so weiterzubilden, daß eine bessere Anpassung des Drehmomentes des Antriebsmotors an die Fahrzeugbelastung ermöglicht wird.

Diese Aufgabe wird durch die kennzeichnenden Merkmale des Anspruches 1 in Verbindung mit dessen gattungsbildenden Merkmalen gelöst. Die Verstellung der Hydropumpe bei Fahrt mit nicht überlastetem Antriebsmotor erfolgt, wie bisher im Stand der Technik, in Abhängigkeit von dem von der hydraulischen DA-Einrichtung erzeugten drehzahlproportionalen Stelldruck. Im Gegensatz zum Stand der Technik jedoch wird die Hydropumpe während der Grenzlastregelung in Abhängigkeit von dem der Ansteuerung des Steuerventils proportionalen Volumen des Stelldruckmittels auf kleineres Fördervolumen verstellt.

Es werden also zwei voneinander unabhängige Steuerungen zur Verstellung der Hydropumpe verwendet; folglich ist die erfindungsgemäße Vorrichtung ohne Berücksichtigung der Erfordernisse der bisherigen Grenzlastregelung, also ohne Teilinch-Einrichtung, ausgebildet. Das automotive Fahren erfolgt lediglich bei nicht überlastetem Antriebsmotor mit Hilfe der DA-Einrichtung; durch entsprechende Auslegung derselben sowie der Stelleinrichtung und Abstimmung dieser beiden Einrichtungen auf die Hydropumpe kann automotiv auf der Grundlage beliebig steiler Fördervolumen/Drehzahl-Kennlinien gefahren werden, so daß die Hydropumpe ebenso wie im Fall der Vorrichtung gemäß dem Stand der Technik mit Teilinch-Einrichtung bei niedrigeren Drehzahlen als der maximalen Drehzahl auf maximales Fördervolumen ausgeschwenkt ist, z.B. dann, wenn der Antriebsmotor sein maximales Antriebsmoment entwickelt. Das maximale Antriebsmoment wird also wie bei Verwendung einer Teilinch-Einrichtung bereits bei niedrigeren Drehzahlen erreicht und damit der Kraftstoffverbrauch gesenkt und die Geräuschentwicklung verringert.

Die drehzahlunabhängige Verstellung des Fördervolumens der Hydropumpe bei Drückung des Antriebsmotors erfolgt durch Ansteuerung eines Steuerventils durch eine vorzugsweise elektronische Steuereinheit in Abhängigkeit von der Drehzahl oder der Drehzahldrückung, so daß das Steuerventil in einen Durchflußverstellbereich verstellt wird, in dem die Stelleinrichtung an den Tank angeschlossen und die beim automotiven Fahren unwirksame Rückführeinrichtung wirksam ist, so daß die Hydropumpe entsprechend der Stärke des Steuersignals entlang jeder gewünschten, beispielsweise in der elektronischen Steuereinheit gespeicherten und vorzugsweise beliebig veränderbaren Fördervolumen/Drehzahl-Kennlinie oder Fördervolumen/Drehzahldrückungs-Kennlinie auf kleineres Fördervolumen zurückgeschwenkt werden kann. Auf diese Weise ist es möglich, die Grenzlastregelung mit jeder beliebigen Drehzahldrückung durchzuführen. Verläuft die Fördervolumen-Kennlinie im wesentlichen senkrecht zur Drehzahl- bzw. Drehzahldrückungs-Koordinatenachse, so erfolgt die Grenzlastregelung praktisch ohne Drehzahldrückung. Erfindungsgemäß wird die Antriebsleistung ohne Verwendung einer Teilinch-Einrichtung optimal ausgenutzt, und zwar über den gesamten Drehzahlbereich, also mit dem Vorteil, daß die Grenzlastregelung auch bei nicht auf maximales Fördervolumen ausgeschwenkter Hydropumpe entlang jeder gewünschten Kennlinie durchgeführt werden kann.

Weitere Merkmale und Vorteile der Erfindung ergeben sich aus den Unteransprüchen.

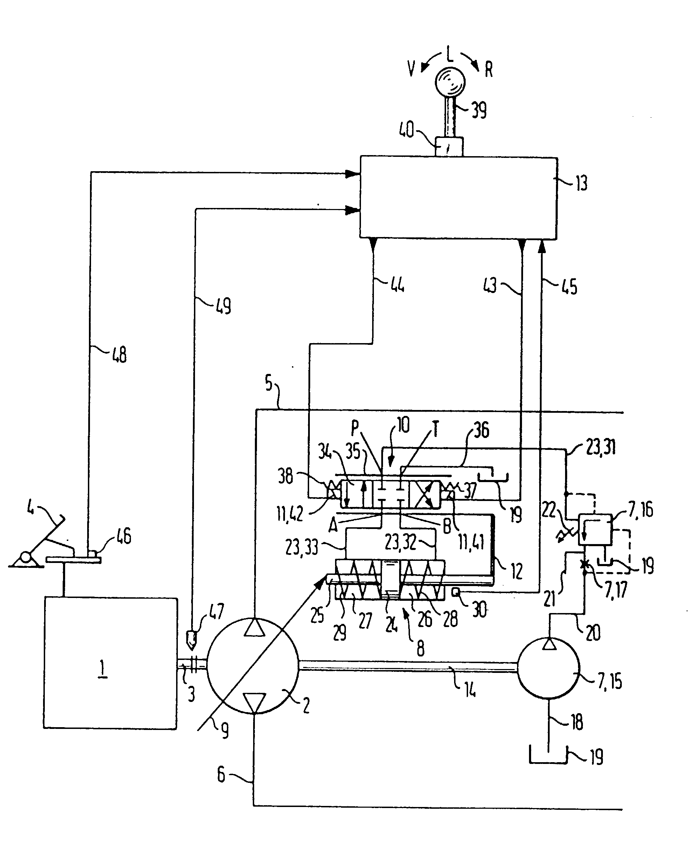

Nachstehend ist die erfindungsgemäße Vorrichtung zum Verstellen des Fördervolumens einer Hydropumpe anhand eines Ausführungsbeispiels unter Bezugnahme auf den Schaltplan der einzigen Figur näher beschrieben, die einen hydrostatischen Fahrantrieb eines Fahrzeugs zeigt.

Dieser hydrostatische Fahrantrieb umfaßt einen Antriebsmotor 1, ein hydrostatisches Getriebe mit einer Hydropumpe 2 verstellbaren Fördervolumens und einen nicht gezeigten Hydromotor für den Antrieb der Antriebsräder des Fahrzeugs sowie die erfindungsgemäße Vorrichtung zum Verstellen des Fördervolumens der Hydropumpe 2.

Der Antriebsmotor 1 ist ein über eine Antriebswelle 3 mechanisch mit der Hydropumpe 2 gekoppelter Brennkraftmotor, wie etwa ein Dieselmotor, dessen Kraftstoffzufuhr und damit dessen Drehmoment bzw. Drehzahl mittels eines Gaspedals 4 verstellbar ist.

Die Hydropumpe 2 ist eine reversierbare, d.h. in zwei Förderrichtungen fördernde Pumpe mit einem verstellbaren, drehzahlabhängigen Fördervolumen, die im geschlossenen Kreislauf über zwei Arbeitsleitungen 5, 6 mit dem Hydromotor in Fluidverbindung steht; im übrigen ist das hydrostatische Getriebe von bekannter Ausführung und deshalb nicht weiter beschrieben.

Die erfindungsgemäße Anordnung zum Verstellen des Fördervolumens der Hydropumpe 2 umfaßt eine sog. hydraulische DA(für drehzahlabhängig)-Einrichtung 7 zum Erzeugen eines Steuerfluids mit einem zur Drehzahl des Antriebsmotors 1 proportionalen Stelldruck, eine Stelleinrichtung 8, die mit dem Stellglied 9 der Hydropumpe 2 zum Verstellen des Fördervolumens derselben gekoppelt ist, ein Steuerventil 10 zur Steuerung der Zufuhr des Steuerfluids zur Stelleinrichtung 8, eine elektrisch ansteuerbare Betätigungseinrichtung 11 für das Steuerventil 10, eine Rückführeinrichtung 12, die die Fördervolumen-Einstellung der Hydropumpe 2 erfaßt und zum Steuerventil 10 rückmeldet, sowie eine elektronische Steuereinheit 13 zur Ausgabe von Steuersignalen an die Betätigungseinrichtung 11.

Die DA-Einrichtung 7 ermöglicht das sog. automotive Fahren, bei dem das Fördervolumen der Hydropumpe 2 proportional zur Drehzahl des Antriebsmotors 1 verstellt wird. Die DA-Einrichtung 7 umfaßt eine mit der Hydropumpe 2 über eine Durchgangswelle 14 mechanisch gekoppelte Hilfspumpe 15 konstanten Fördervolumens und mit einer Förderrichtung sowie ein Regelventil 16, üblicherweise als DA-Regelventil bezeichnet, mit einer hier außerhalb desselben eingezeichneten Meßblende 17.

Eine Ansaugleitung 18 verbindet den Tank 19 mit dem Eingang der Steuerpumpe 15, deren Ausgang über eine Anschlußleitung 20 mit dem ständig offenen Eingang des DA-Regelventils 16 in Verbindung steht.

Das DA-Regelventil 16 ist ein Differenzdruckregelventil mit ständigem gedrosseltem Ablauf zum Tank 19. Dieser Ablauf ermöglicht eine ständige Strömung des von der Hilfspumpe 15 geförderten, der Drehzahl des Antriebsmotors 1 direkt proportionalen Volumenstroms und damit den Aufbau einer drehzahlproportionalen Druckdifferenz zwischen dem Ausgangsdruck der Hilfspumpe 15 in Strömungsrichtung vor und dem Druck in Strömungsrichtung nach der Meßblende 17. Das DA-Regelventil 16, auch als Druckwaage bezeichnet, ist von allgemein bekannter Ausführung und deshalb nicht näher beschrieben. Seine Funktion besteht darin, aus der Druckdifferenz an der Meßblende 17 einen drehzahlproportionalen Stelldruck abzuleiten. Zu diesem Zweck wird sein Ventilkörper von der Druckdifferenz gegen die Kraft einer einstellbaren Feder 22 in Richtung Offenstellung beaufschlagt. Sobald die hydraulische Kraft der Druckdifferenz die Federkraft übersteigt, öffnet das DA-Regelventil 16, so daß sich an seinem Ausgang und in einer an diesen angeschlossenen Stelldruckmittelleitung 23 der drehzahlproportionale Stelldruck aufbaut, der der Druckdifferenz an der Meßblende 17 entgegenwirkt und das DA-Regelventil 16 so lange in Richtung Schließstellung verstellt, bis Kraftgleichgewicht an seinem Ventilkörper herrscht. Auf diese Weise wird erreicht, daß der der Druckdifferenz an der Meßblende 17 entgegenwirkende Stelldruck dem von der Hilfspumpe 15 geförderten drehzahlproportionalen Volumenstrom und damit der Drehzahl des Antriebsmotors 1 direkt proportional ist.

Die Stelleinrichtung 8 ist als doppeltwirkender hydraulischer Gleichgang-Stellzylinder ausgebildet, dessen Stellkolben 24 über die Kolbenstange 25 mit dem Stellglied 9 zum Verstellen des Fördervolumens der Hydropumpe 2 gekoppelt ist und zwei Steuerräume 26, 27 begrenzt, in denen je eine Zentrierfeder 28, 29 angeordnet ist, die den Stellkolben 24 in Richtung einer dem Null-Fördervolumen der Hydropumpe 2 entsprechenden Mittelstellung federzentriert. Der Stelleinrichtung 8 ist ein Sensor 30 zum Erfassen des Stellwegs und der Stellrichtung des Stellkolbens 24 bzw. der Kolbenstange 25 zugeordnet.

Das Steuerventil 10 ist in der Steuerfluidleitung 23 angeordnet und teilt diese in einen zum DA-Regelventil 16 führenden Hauptleitungsabschnitt 31 und zwei Zweigleitungsabschnitte 32, 33, die zu den Steuerräumen 26, 27 des Stellzylinders 8 führen. Das Steuerventil 10 ist ein stetig verstellbares 4/3-Wegeventil, das in bekannter Weise einen Ventilkolben 34 sowie eine Ventilhülse 35 umfaßt und je einen Arbeitsanschluß T an eine zum Tank 19 führende Entlastungsleitung 36, einen Arbeitsanschluß P an den Hauptleitungsabschnitt 31 der Steuerfluidleitung 23 sowie je einen Arbeitsanschluß A, B an die Zweigleitungsabschnitte 32, 33 aufweist. Das Steuerventil 10 ist durch zwei Ventil-Zentrierfedern 37, 38 in der in der Figur gezeigten (federzentrierten) Mittelstellung gehalten, in der sämtliche Anschlüsse A, B, P und T gesperrt und die Hydropumpe 2 auf Null-Fördervolumen eingestellt ist. Dem Steuerventil 10 ist ein auf Leerlauf L, Vorwärtsfahrt V und Rückwärtsfahrt R einstellbarer Fahrtrichtungs-Schalter 39 und ein Potentiometer 40 zum Erfassen der jeweiligen Stellung des Schalters 39 zugeordnet.

Die Betätigungseinrichtung 11 für das Steuerventil 10 ist eine Proportional-Betätigungseinrichtung, die zwei Proportionalmagnete 41, 42 umfaßt, die an den einander gegenüberliegenden Enden des Ventilkolbens 34 zur stufenlosen Verstellung desselben vorgesehen und über je eine Steuersignalleitung 43, 44 an die elektronische Steuereinheit 13 angeschlossen sind.

Die Kolbenstange 25 des Stellzylinders 8 ist mechanisch mit der Ventilhülse 35 des Steuerventils 10 derart zwangsgekoppelt, daß diese mit gleichem Richtungssinn und gleicher Geschwindigkeit bewegt werden.

Die elektronische Steuereinheit 13 ist an das Potentiometer 40 des Fahrtrichtungs-Schalters 39, über eine Signalleitung 45 an den Sensor 30 zum Erfassen des Stellwegs des Stellkolbens 24 sowie an einen ersten Sensor 46 zum Erfassen der mit dem Gaspedal 4 vorgegebenen Solldrehzahl des Antriebsmotors 1 und einen zweiten Sensor 47 zum Erfassen der Istdrehzahl des Antriebsmotors 1 über je eine Signalleitung 48, 49 angeschlossen.

Die im vorliegenden Zusammenhang interessierende Funktion der elektronischen Steuereinheit 13 besteht u.a. darin, die Ausgangssignale der Sensoren 46, 47, d.h. die mit dem Gaspedal 4 jeweils vorgegebene Solldrehzahl des Antriebsmotors 1 und dessen jeweilige Istdrehzahl ständig miteinander zu vergleichen und bei Drehzahlgleichheit ein erstes Steuersignal und bei einer Drehzahldrückung des Antriebsmotors, d.h. bei einem durch Überlastung verursachten Rückgang seiner Istdrehzahl um einen vorgegebenen, einstellbaren Betrag gegenüber seiner Solldrehzahl ein zweites, der Drehzahldrückung proportionales Steuersignal an die Ansteuereinrichtung 11 auszugeben. In der elektronischen Steuereinheit 13 ist eine Steuersignal/Drehzahldrückungs-Kennlinie gespeichert, deren Steigung beliebig verändert werden kann. Statt dieser einen Kennlinie können aber auch mehrere Kennlinien mit jeweils unterschiedlicher Steigung gespeichert sein, aus denen die jeweils gewünschte ausgewählt wird.

Die Ausgabe des ersten Steuersignals erfolgt bei Stellung des Fahrtrichtungsschalters 39 auf V an den rechten und bei Stellung auf R an den linken Proportionalmagneten 41 bzw. 42. Dadurch wird das Steuerventil 10 (bzw. dessen Ventilkolben 34) in eine linke bzw. rechte Durchfluß-Endstellung mit freiem Durchflußquerschnitt überführt, in der seine Arbeitsanschlüsse P und B sowie A und T bzw. P und A sowie T und B miteinander verbunden sind. Dementsprechend strömt das mit dem drehzahlproportionalen Stelldruck beladene Steuerfluid in den rechten Druckraum 26 bzw. linken Druckraum 27 des Stellzylinders 8 ein und verschiebt den Stellkolben 24 in Richtung seiner linken bzw. rechten Endstellung so lange, bis Gleichgewicht zwischen der Kraft der jeweils zusammengedrückten Zentrierfeder 29 bzw. 28 sowie der Eigenrückstellkraft der Hydropumpe 2 einerseits und der hydraulischen Kraft des Stelldrucks andererseits herrscht. Die Endstellungen des Stellkolbens 24 entsprechen dem maximalen Fördervolumen der Hydropumpe 2 in der jeweiligen Stromrichtung. Die DA-Einrichtung 7 und die Zentrierfedern 28, 29 der Stelleinrichtung 8 sind so ausgebildet und auf die Eigenrückstellkräfte der Hydropumpe 2 abgestimmt, daß letztere auf maximales Fördervolumen bei derjenigen Drehzahl ausgeschwenkt ist, bei der der Antriebsmotor sein maximales Antriebsmoment entwickelt; diese Drehzahl und der zugeordnete Stelldruck sind kleiner als die entsprechenden Maximalwerte.

Bei Drehzahl- und damit Stelldruckreduzierung beginnt die Rückstellung des Stellkolbens 24 in Richtung Mittelstellung, sobald die vorerwähnten Drehzahl- und Stelldruckwerte unterhalb der entsprechenden Maximalwerte sind. Die elektronische Steuereinheit 13 erfaßt dabei über das Ausgangssignal des Sensors 30 die jeweilige Stellung des Stellkolbens 24 und verstärkt das erste Steuersignal bei Bewegung des Stellkolbens 24 in Richtung seiner jeweiligen Endstellung proportional zu der von ihm zurückgelegten Wegstrecke und schwächt es bei Bewegung des Stellkolbens in Richtung seiner Mittelstellung ebenfalls proportional zum Stellweg ab. Auf diese Weise werden die Ventilhülse 35 (über den Rückführhebel 12) und der Ventilkolben 34 (über Änderungen des ersten Steuersignals) bei Bewegungen des Stellkolbens 24 im gleichen Richtungssinn und um die gleiche Wegstrecke verstellt, so daß die jeweilige Durchfluß-Endstellung während der gesamten Dauer der Ansteuerung mit dem ersten Steuersignal aufrechterhalten wird. Mit anderen Worten, die Rückführeinrichtung 12 ist unwirksam, so daß der Stellkolben 24 lediglich durch den drehzahlproportionalen Stelldruck und damit das Fördervolumen der Hydropumpe 2 in Abhängigkeit von der Drehzahl des Antriebsmotors 1 entlang der vorgegebenen Stelldruck/Drehzahl-Kennlinie verstellt wird.

Die Ausgabe des zweiten Steuersignals erfolgt bei unveränderter Fahrtrichtung an den dem bisher vom ersten Steuersignal angesteuerten Proportionalmagneten 41 oder 42 jeweils gegenüberliegenden Proportionalmagneten 42 bzw. 41, der dementsprechend den Ventilkolben 34 des Steuerventils 10 von seiner vorhergehenden rechten oder linken Endstellung nach links bzw. nach rechts über die Mittelstellung hinaus verstellt. In der beispielsweise rechten Endstellung ist der Durchfluß vom Arbeitsanschluß P nach A sowie der von B nach T geöffnet, so daß der bisher mit der Steuerfluidleitung 23 verbundene rechte Steuerraum 26 des Stellzylinders 8 zum Tank 19 hin entlastet ist, während gleichzeitig Steuerfluid in den bisher an den Tank 19 angeschlossenen linken Steuerraum 27 einströmt. Dadurch wird der Stellkolben 24 des Stellzylinders 8 nach rechts in Richtung seiner Mittelstellung so lange bewegt, bis die dieser Bewegung über den Rückführhebel 12 folgende Ventilhülse 35 in die der Mittelstellung des Steuerventils 10 entsprechende Position gelangt, d.h. das Steuerventil 10 schließt. Mit anderen Worten, der Stellkolben 24 wird in Abhängigkeit von dem aus dem rechten oder linken Druckraum 26 bzw. 27 ausströmenden, der Stärke des Steuersignals und damit der Drehzahldrückung des Antriebsmotors 1 proportionalen Volumen des Stelldruckmittels in Richtung seiner Mittelstellung und damit die Hydropumpe 2 auf entsprechendes kleineres Fördervolumen verstellt. Letztere nimmt dabei ein dem kleineren Fördervolumen entsprechendes geringeres Drehmoment auf, wodurch die Überlastung des Antriebsmotors 1 aufgehoben und Drehzahlabfall verhindert wird.

Diese Entlastung des Antriebsmotors 1 durch die elektronische, volumenabhängige Steuerung der Hydropumpe 2 erfolgt somit unabhängig von deren hydraulischen, stelldruck- bzw. drehzahlabhängigen Steuerung.

Mit der elektronischen, volumenabhängigen Steuerung kann also - entsprechend der Ansteuerung des Steuerventils 10 mit dem zweiten Steuersignal - die Hydropumpe unabhängig von der Drehzahl des Antriebsmotors nicht nur entlang jeder gewünschten, beispielsweise im wesentlichen senkrecht zur Drehzahldrückungs-Koordinatenachse verlaufenden Kennlinie, sondern auch bis zu jedem gewünschten Fördervolumen zurückgeschwenkt werden, bei dem das von ihr aufgenommene Drehmoment z.B. kleiner als das Antriebsmoment des Antriebsmotors ist. Die dabei freigewordene Leistung kann z.B. von einem zusätzlichen Verbraucher abgenommen werden, ohne daß zuvor eine Drehzahldrückung auftritt. Damit ermöglicht die erfindungsgemäße Vorrichtung sowohl die herkömmliche Grenzlastregelung (Zurückschwenken der Hydropumpe auf ein solches Fördervolumen, bei dem das von ihr aufgenommene Drehmoment gleich dem vom Antriebsmotor abgegebenen Drehmoment ist) als auch eine darüber hinausgehende Regelung. Beide Regelungen können über den gesamten Drehzahlbereich des Antriebsmotors durchgeführt werden. Dies ist insbesondere vorteilhaft beim Fahren im unteren Drehzahlbereich, bevor der Antriebsmotor sein maximales Drehmoment entwickelt. In einem solchen Fall würde bei der aus dem Stand der Technik bekannten hydraulischen Grenzlaststeuerung unter Verwendung der DA-Einrichtung ein Drehmomentengleichgewicht zwischen Hydropumpe und Antriebsmotor nur bei sehr großer Drückung, wenn überhaupt, erreicht werden, da mit zunehmendem Drehzahlabfall im genannten unteren Drehzahlbereich sich das Drehmoment das Antriebsmotors verringert.

Die vorstehende mechanische Rückführeinrichtung ist hier der Einfachheit halber in Verbindung mit der elektronischen Steuereinheit beschrieben, ist jedoch hauptsächlich für den Einsatz ohne diese vorgesehen. Bei Einsatz einer elektronischen Steuereinheit bietet es sich an, die Rückführung des Steuerventils in seine Schließstellung bei Drückung des Antriebsmotors durch Abschwächen des zweiten Steuersignals durchzuführen und diese Rückführung beim automotiven Fahren durch entsprechende Veränderung des ersten Steuersignals auszugleichen, d.h. unwirksam zu machen.

## Patentansprüche

1. Anordnung zum lastabhängigen Verstellen des Fördervolumens einer Hydropumpe (2), die Teil eines hydrostatischen Getriebes und von einem Antriebsmotor (1) mit verstellbarer Drehzahl antreibbar sowie von einer elektronischen Steuereinheit (13) ansteuerbar ist,
mit einer mit dem Antriebsmotor (1) gekoppelten Steuerpumpe (15), welche einen drehzahlabhängigen Stelldruck erzeugt und Steuerfluid für eine drehzahlabhängige Einrichtung (7) bereitstellt,
mit einer einen Stellkolben (24) aufweisenden Stelleinrichtung (8) zum Verstellen des Fördervolumens der Hydropumpe (2), und mit einem Steuerventil (10), das einen Steuerkolben (34) aufweist und das durch eine elektronisch ansteuerbare Betätigungseinrichtung (11) in zwei gegenüberliegende Endstellungen überführbar ist, in denen die Stelleinrichtung (8) und damit das Fördervolumen der Hydropumpe (2) stelldruckabhängig veränderbar ist,
**dadurch gekennzeichnet,**
daß das Steuerventil (10) eine Steuerhülse (35) aufweist, die relativ zum Steuerkolben (34) des Steuerventils (10) axial verschiebbar und mit der Bewegung des Stellkolbens (24) der Stelleinrichtung (8) zwangsgekoppelt ist, daß das Steuerventil (10) als ein stufenlos verstellbares Vierwegeventil ausgebildet ist, welches in einer Mittelstellung den Durchfluß des Steuerfluids zu der Stelleinrichtung (8) sperrt und in den beiden Endstellungen den Stellkolben (24) in eine jeweils entgegengesetzte Richtung betätigt,
daß bei einer Übereinstimmung der Soll- und Ist-Drehzahlwerte des Antriebsmotors (1) der Steuerkolben (34) synchron zur Bewegung der Steuerhülse (35) des Steuerventils (10) nachgeführt und das Fördervolumen der Hydropumpe (2) auf das der Drehzahl des Antriebsmotors (1) entsprechende, größtmögliche Drehmoment erhöht wird, welches von der elektronischen Steuereinheit (13) vorgegeben ist, und daß bei einem infolge einer Überlastung des Antriebsmotors (1) auftretenden Drehzahlabfall der Steuerkolben (34) und die Steuerhülse (35) unabhängig voneinander betätigt werden und das Fördervolumen der Hydropumpe (2) um ein vorgegebenes Maß verringert wird.

2. Anordnung zum lastabhängigen Verstellen des Fördervolumens einer Hydropumpe (2) nach Anspruch 1,
**dadurch gekennzeichnet,**
daß an die elektronische Steuereinheit (13) jeweils ein Sensor (46, 47) zum Erfassen der vorgegebenen Soll- und der Ist-Drehzahlwerte des Antriebsmotors (1) angeschlossen ist.

3. Anordnung zum lastabhängigen Verstellen des Fördervolumens einer Hydropume (2) nach Anspruch 1 oder 2,
**dadurch gekennzeichnet,**
daß die elektronische Steuereinheit (13) den Steuerkolben (34) und die Steuerhülse (35) bei Drehzahlabfall bzw. einer Drehzahdrückung des Antriebsmotors (1) unabhängig voneinander derartig ansteuert, daß die Hydropumpe (2) auf ein Fördervolumen zurückgeschwenkt wird, bei dem ihr maximales Drehmoment gleich oder kleiner als das Drehmoment des Antriebsmotors (1) ist.

4. Anordnung zum lastabhängigen Verstellen des Fördervolumens einer Hydropumpe (2) nach einem der vorhergehenden Ansprüche,
**dadurch gekennzeichnet,**
daß die Hydropumpe (2) eine reversierbare Hydropumpe ist, daß die Stelleinrichtung (8) als doppelwirkender Gleichgang-Stellzylinder ausgebildet ist, dessen Stellkolben (24) zwei Steuerräume (26, 27) definiert, in denen je eine den Stellkolben (24) in Richtung einer dem Null-Fördervolumen der Hydropumpe (2) entsprechenden Mittelstellung beaufschlagende Zentrierfeder (28, 29) angeordnet ist, und daß das als stufenlos verstellbares Vierwegeventil ausgebildete Steuerventil (10) in den beiden Endstellungen jeweils einen der beiden Steuerräume (26, 27) der Stelleinrichtung (8) an die drehzahlabhängige Einrichtung (7) und den jeweils anderen Steuerraum (27, 26) an einen Tank (19) anschließt.

5. Anordnung zum lastabhängigen Verstellen des Fördervolumens einer Hydropumpe (2) nach einem der vorhergehenden Ansprüche,
**dadurch gekennzeichnet,**
daß die elektronische Steuereinheit (13) an einen Sensor (30) zum Erfassen der Bewegung der Steuerhülse (35) oder des Steuerkolbens (34) angeschlossen ist.

6. Anordnung zum lastabhängigen Verstellen des Fördervolumens einer Hydropumpe (2) nach einem der vorhergehenden Ansprüche,
**dadurch gekennzeichnet,**
daß die mit dem Antriebsmotor (1) gekoppelte Steuerpumpe (15) ein konstantes Fördervolumen aufweist, und daß der drehzahlproportionale Volumenstrom der Steuerpumpe (15) an einer Meßblende (17) einen drehzahlproportionalen Differenzdruck erzeugt, von dem der drehzahlproportionale Stelldruck für die drehzahlabhängige Einrichtung (7) abgeleitet wird.

## Claims

1. Arrangement for the load-dependent adjustment of the volumetric delivery of a hydraulic pump (2), which is part of a hydrostatic transmission and can be driven by a drive engine (1) with adjustable speed and actuated by an electronic control unit (13),
with a control pump (15), which is coupled to the drive engine (1), produces a speed-dependent adjusting pressure and provides control fluid for a speed-dependent device (7), with an adjusting device (8), which comprises an adjusting piston (24), for adjusting the volumetric delivery of the hydraulic pump (2), and with a control valve (10) which comprises a control piston (34) and can be changed over by an operating device (11), which can be electronically actuated, to two opposite end positions in which the adjusting device (8) and thus the volumetric delivery of the hydraulic pump (2) can be varied in accordance with the adjusting pressure,
characterised in that the control valve (10) comprises a control sleeve (35) which can be axially displaced relative to the control piston (34) of the control valve (10) and is positively coupled to the movement of the adjusting piston (24) of the adjusting device (8), that the control valve (10) is formed as a steplessly adjustable four-way valve which blocks the passage of the control fluid to the adjusting device (8) in a centre position and operates the adjusting piston (24) in a respective opposite direction in the two end positions, that when the desired and actual speed values of the drive engine (1) correspond, the control piston (34) is brought into synchronism with the movement of the control sleeve (35) of the control valve (10) and the volumetric delivery of the hydraulic pump (2) is increased to the greatest possible torque which corresponds to the speed of the drive engine (1) and which is predetermined by the electronic control unit (13), and that if the speed drops due to the drive engine (1) being overloaded, the control piston (34) and the control sleeve (35) are operated independently of one another and the volumetric delivery of the hydraulic pump (2) is reduced by a predetermined quantity.

2. Arrangement for the load-dependent adjustment of the volumetric delivery of a hydraulic pump (2) according to claim 1,
characterised in that a respective sensor (46, 47) for detecting the predetermined desired and the actual speed values of the drive engine (1) is connected to the electronic control unit (13).

3. Arrangement for the load-dependent adjustment of the volumetric delivery of a hydraulic pump (2) according to claim 1 or 2,
characterised in that the electronic control unit (13) actuates the control piston (34) and the control sleeve (35) independently of one another when the speed of the drive engine (1) drops or is limited such that the hydraulic pump (2) is set back to a volumetric delivery at which its maximum torque is equal to or less than the torque of the drive engine (1).

4. Arrangement for the load-dependent adjustment of the volumetric delivery of a hydraulic pump (2) according to one of the preceding claims,
characterised in that the hydraulic pump (2) is a reversible hydraulic pump, that the adjusting device (8) is formed as a double-acting synchronising adjusting cylinder whose adjusting piston (24) defines two control chambers (26, 27), in each of which a centring spring (28, 29) is disposed, this acting on the adjusting piston (24) in the direction of a centre position corresponding to a zero volumetric delivery of the hydraulic pump (2), and that the control valve (10) formed as a steplessly adjustable four-way valve connects one of the two control chambers (26, 27) of the adjusting device (8) to the speed-dependent device (7) and the respective other control chamber (27, 26) to a tank (19) in the two end positions.

5. Arrangement for the load-dependent adjustment of the volumetric delivery of a hydraulic pump (2) according to one of the preceding claims,
characterised in that the electronic control unit (13) is connected to a sensor (30) for detecting the movement of the control sleeve (35) or of the control piston (34).

6. Arrangement for the load-dependent adjustment of the volumetric delivery of a hydraulic pump (2) according to one of the preceding claims,
characterised in that the control pump (15) coupled to the drive engine (1) has a constant volumetric delivery, and that the speed-proportional volumetric flow of the control pump (15) produces at an orifice meter (17) a speed-proportional differential pressure from which the speed-proportional adjusting pressure for the speed-dependent device (7) is derived.

## Revendications

1. Système de réglage, en fonction de la charge, du volume déplacé d'une pompe hydraulique (2) qui fait partie d'une transmission hydrostatique et qui peut être entraînée par un moteur d'entraînement (1) à régime variable et être commandée par une unité électonique de commande (13), comprenant
une pompe de commande (15), qui est accouplée au moteur d'entraînement (1) et qui une pression de réglage fonction du régime et fournit un fluide de commande pour un dispositif (7) asservi au régime,
un dispositif de réglage (8) comportant un piston de réglage (24) pour le réglage du débit de la pompe hydraulique (2), et une valve de commande (10) qui comporte un tiroir de commande (34) et qui, au moyen d'un dispositif d'actionnement à commande électronique (11), peut être amenée dans deux positions extrêmes opposées, dans lesquelles le dispositif de réglage (8) et par conséquent le volume déplacé de la pompe hydraulique (2) peuvent être modifiés en fonction de la pression de réglage,
caractérisé en ce que la valve de commande (10) comporte un fourreau de commande (35), qui peut coulisser en direction axiale par rapport au tiroir de commande (34) de la valve de commande (10) et qui est accouplé rigidement au piston de réglage (24) du dispositif de réglage (8) pour se déplacer avec lui, en ce que la valve de commande (10) est conçue sous la forme d'un distributeur à quatre orifices à ajustement continu qui dans une position médiane, bloque le passage du fluide de commande en direction du dispositif de réglage (8) et, dans les deux positions extrêmes, actionne le piston de réglage (24) dans des directions respectives opposées, en ce que, en cas d'égalité des valeurs prescrite et réelle de la vitesse de rotation du moteur d'entraînement (1), le tiroir de commande (34) se déplace en suivant, de façon synchrone, le déplacement du fourreau de commande (35) de la valve de commande (10) et le volume déplacé de la pompe hydraulique (2) est augmenté pour atteindre la valeur du couple le plus grand possible correspondant au régime du moteur d'entraînement (1), lequel couple est pré-établi par l'unité électronique de commande (13), et en ce que, dans le cas d'une chute de régime se produisant à la suite d'une surcharge du moteur d'entraînement (1), le tiroir de commande (34) et le fourreau de commande (35) sont actionnés indépendamment l'un de l'autre et le volume déplacé de la pompe hydraulique (2) est réduit dans une mesure pré-établie.

2. Système de réglage, en fonction de la charge, du volume déplacé d'une pompe hydraulique (2), selon la revendication 1, caractérisé en ce que des capteurs (46, 47) destinés à détecter respectivement la valeur prescrite pré-établie de la vitesse de rotation et la valeur réelle de la vitesse de rotation du moteur d'entraînement (1) sont raccordés à l'unité électronique de commande (13).

3. Système de réglage, en fonction de la charge, du volume déplacé d'une pompe hydraulique (2), selon la revendication 1 ou 2, caractérisé en ce que, dans le cas d'une chute de régime ou d'un glissement de régime du moteur d'entraînement (1), l'unité électronique de commande (13) excite le tiroir de commande (34) et le fourreau de commande (35) indépendamment l'un de l'autre, d'une manière telle que la pompe hydraulique (2) soit amenée à rebasculer sur un volume déplacé pour lequel son couple maximum est identique ou inférieur au couple du moteur d'entraînement (1).

4. Système de réglage, en fonction de la charge, du volume déplacé d'une pompe hydraulique (2), selon l'une des revendications précédentes, caractérisé en ce que la pompe hydraulique (2) est une pompe hydraulique réversible, on ce que le dispositif de réglage (8) est conçu sous la forme d'un vérin de réglage à double effet et à vitesse d'action constante, dont le piston de réglage (24) définit deux chambres-pilotes (26, 27), dans chacune desquelles est disposé un ressort de centrage (28, 29) sollicitant le piston de réglage (24) en direction d'une position médiane correspondant à un volume déplacé nul de la pompe hydraulique (2), et en ce que la valve de commande (10), conçue sous la forme d'un distributeur à quatre orifices ajustable de façon continue, raccorde, dans chacune de ses deux positions extrêmes, l'une des deux chambres-pilotes (26, 27) du dispositif de réglage (8) au dispositif (7) asservi au régime et l'autre chambre-pilote (27, 26), à un réservoir (19).

5. Système de réglage, en fonction de la charge, du volume déplacé d'une pompe hydraulique (2), selon l'une des revendications précédentes, caractérisé en ce que l'unité électronique de commande (13) est connectée à un capteur (30) destiné à détecter le déplacement du fourreau de commande (35) ou du tiroir de commande (34).

6. Système de réglage, en fonction de la charge, du volume déplacé d'une pompe hydraulique (2), selon l'une des revendications précédentes, caractérisé en ce que la pompe de commande (15), qui est accouplée au moteur d'entraînement (1), a une cylindrée fixe et en ce que le flux volumique, proportionnel au régime, de la pompe de commande (15) produit, au niveau d'un orifice de mesure (17), une pression différentielle proportionnelle au régime, de laquelle est dérivée la pression de réglage proportionnelle au régime pour le dispositif (7) asservi au régime.
